# EUROPEAN PATENT SPECIFICATION

(11) **EP 2 432 618 B1**
(45) Date of publication and mention of the grant of the patent: **20.03.2013**
(21) Application number: 09785917.7
(22) Date of filing: 21.05.2009
(51) Int. Cl.: B23Q 1/52, B23Q 1/76, B23Q 37/00, B23Q 39/02

(54) **MACHINE TOOL**
WERKZEUGMASCHINE
MACHINE-OUTIL

(43) Date of publication of application: 28.03.2012
(73) Proprietor: Emmegi S.P.A., 41010 Limidi di Soliera (IT)
(72) Inventor: CAIUMI, Andrea, I-41012 Carpi (MO) (IT)
(74) Representative: Crugnola, Pietro
(86) International application number: PCT/IB2009/005668
(87) International publication number: WO 2010/133910

(56) References cited:
- DE-A1- 4 113 629
- FR-A- 2 906 741
- US-A1- 2007 199 187

## Description

The invention relates to a machine tool for machining elongated elements, in particular metal and/or plastic profiled elements, frames of fixtures, such as for example, windows, French doors, doors, shutters and the likes, according to the preamble of claim 1, as for example know from DE-A-41 13 629.

Machine tools are known comprising a cutting unit provided with a rotating-disc blade or saw and a milling unit provided with a spindle, the rotating-disc blade and the spindle being arranged for interacting with an elongated element supported and clamped by suitable supporting means. The latter generally has a plurality of clamps that are spaced apart from one another and are aligned along a first direction X that is substantially parallel to a longitudinal axis of the element. The clamps engage and clamp the elongated element, which can be machined appropriately by the cutting and/or milling unit.

The cutting unit is generally movable along an advancing direction Y that is almost orthogonal to the first direction X, for example horizontal or vertical, the cutting unit being automatically driven by suitable movement means. Alternatively, the cutting unit can be rotatable around a rotation axis that is parallel to the first direction X and orthogonal to a plane on which lies the disc blade, the latter thus being movable according to an arched advancing trajectory.

Machine tools are known in which the cutting unit is mounted rotatably around a rotation axis that is almost orthogonal to the first direction X and lies on the plane that contains the disc blade, in order to perform cuts with different angles.

Some cutting units are rotatable around a second rotation axis that is orthogonal to the first rotation axis and to the first direction X to perform combined rotations. In machines tools with a rotationally movable cutting unit the cut is made by moving the element to be machined manually along the advancing direction Y.

In known machine tools the milling unit is generally fixed to the cutting unit.

In a similar manner to what has been disclosed above for the cutting unit, the milling unit is generally movable along a further advancing direction Y1 that is almost orthogonal to the first direction X, for example horizontal or vertical, the milling unit being driven automatically by suitable movement means.

The cutting unit and the milling unit are movable independently of one another according to the respective aforesaid directions, the units being commanded by a control and management unit of the known machine tools in function of the machinings to be performed on the element to be machined.

A drawback of the known machine tools disclosed above is that they are not very flexible. In fact, each of them enables a set and limited type of machinings to be performed on the elongated element. In the case of several consecutive machinings, for example facing cuts at the ends of the element, or complex machinings, such as angled cuts or cuts requiring a plurality of successive blade actions, or machinings to be performed on various sides of the element, it is necessary to reposition the latter manually on the supporting means of the machine or even to transfer the element to a different machine tool.

Subsequent repositioning of the machining element may also compromise, owing to positioning errors and/or imprecisions, the quality and the accuracy of the machinings, which may have dimensions or geometry that are different from those requested.

Another drawback of such machines consists of the need to provide one or more operators, with a consequent increase in production costs, to perform the tasks manually that are necessary for removing and repositioning the element to be machined. Such tasks are slow and laborious and cause a considerable increase in total machining time of each element and thus a corresponding decrease in the productivity of the machine tool. Further, in addition to committing errors and imprecisions in positioning and clamping the element, the operator may accidentally injure himself by coming into contact with sharp edges of the element made in a preceding machining. Also, the operators have to replace manually the tools of the cutting unit and of the milling unit when subsequent machinings that are to be performed require different tools. This entails lengthy tooling times of the machine tool with a corresponding further fall in productivity.

A further drawback of certain known machines lies in the manual movement of the elements to be machined in the advancing direction, which in addition to being burdensome for the operator is generally slow and subject to errors and imprecisions that may adversely affect the quality of the machining.

Still another drawback of the machine tools disclosed above is that if cuts have to be made, especially tilted or angled cuts, on elements having cross sections of significant dimensions, it is necessary to use blades of appropriate dimensions to perform the operation in a single pass, in order to avoid having to reposition the element.

A still further drawback of known machine tools is that they have very great overall dimensions in order to be able to machine elongated elements that have a very great extent along the first direction X.

An object of the invention is to improve machine tools for machining elongated elements, in particular profiled elements of frames.

Another object is to make a machine tool that enables a plurality of different machinings to be performed on a element automatically without requiring the operator to intervene manually.

A further object is to obtain a machine tool that is able to perform a plurality of machinings by maintaining the elements to be machined always positioned and fixed to supporting means of the machine.

Still another object is to make a machine tool that enables complex and composite machinings to be performed with one or more actions of the cutting tool and/or of the spindle.

A still further object is to obtain a more flexible machine tool that enables productivity to be increased with respect to known machine tools, in particular for complex machinings.

A still further object is to obtain machine tools with more reduced dimensions than those of known machine tools, for the same maximum lengths of the elongated elements that are machinable thereupon.

According to the invention, a machine tool is provided for machining elongated elements as defined in claim 1.

Owing to this aspect of the invention it is possible to obtain a machine tool that performs a plurality of different machinings on a element to be machined in an automatic manner, without requiring manual intervention by operators. In particular, the machine tool according to the invention is able to perform a plurality of machinings, maintaining the element always positioned and fixed to supporting means. In addition to the possibility of rotating the element around a longitudinal rotation axis, the cutting unit can be moved rectilinearly according to three controlled motion axes whilst the disc blade can be rotated around a further rotation axis, which is also controlled. The possibility of moving in translation the cutting unit along three motion axes gives the machine tool significant flexibility in use. In particular, in fact, the possibility of moving the cutting unit along the first direction X that is substantially parallel to a longitudinal axis of the element to be machined, enables machinings to be performed on elements having a greater longitudinal extent for the same overall dimensions of the machine tool, compared with the elements that can be machined by machine tools of known type.

Alternatively, the possibility of moving the cutting unit along the first direction X enables a machine tool to be arranged that extends in length to a lesser extent than machine tools of known type, for the same length of element to be machined.

Further, the fact that the milling unit, in addition to being movable along three directions that are orthogonal to one another, can also be rotated around a rotation axis K, enables the milling unit to perform milling on the positioned elongated elements, both on the longitudinal faces and on the end faces of the elongated elements. Further, still owing to the movements cited above, the milling unit has the possibility of carrying out a tool change, i.e. of releasing a tool used previously in a tool magazine and of removing a different tool from the tool magazine.

The degrees of liberty of movement of which the element to be machined the cutting unit and the disc blade disposes, enable the machine tool to perform complex and composite machinings with one or more successive actions of the cutting blade and of the milling unit. Further, the possibility of moving the cutting unit and the elongated element towards one another enables the machinings to be made more rapid.

As the aforementioned machinings can be performed automatically on the element, i.e. without the need to dismantle and reposition the element on the supporting means, the productivity of a machine tool according to the invention is significantly greater than that of known machine tools. This further enables more precise and accurate machinings to be obtained, avoiding mounting and positioning errors and imprecisions that may occur following manual repositioning of the element by an operator.

The invention can be better understood and implemented with reference to the attachments that illustrate an embodiment thereof by way of non-limiting example, in which:
Figure 1 is a schematic front view of the machine tool according to the invention, in association with an elongated element and in an operating condition;
Figure 2 is a top plan view of the machine in Figure 1, in a further operating condition;
Figure 3 is a section according to a plane III-III of Figure 1, showing a cutting unit and supporting means in a non-operating condition;
Figure 4 is a section like that in Figure 3, showing the cutting unit and the supporting means in an operating condition;
Figure 5 is a side view of the machine tool in Figure 1, in which the milling unit is visible in an operating condition;
Figures 6A to 6C illustrate the milling unit in different configurations;
Figures 7A to 7L illustrate different machinings that are performable with the machine in Figure 1 on a element to be machined;
Figures 8A to 8D illustrate further machinings that are performable with the machine in Figure 1.

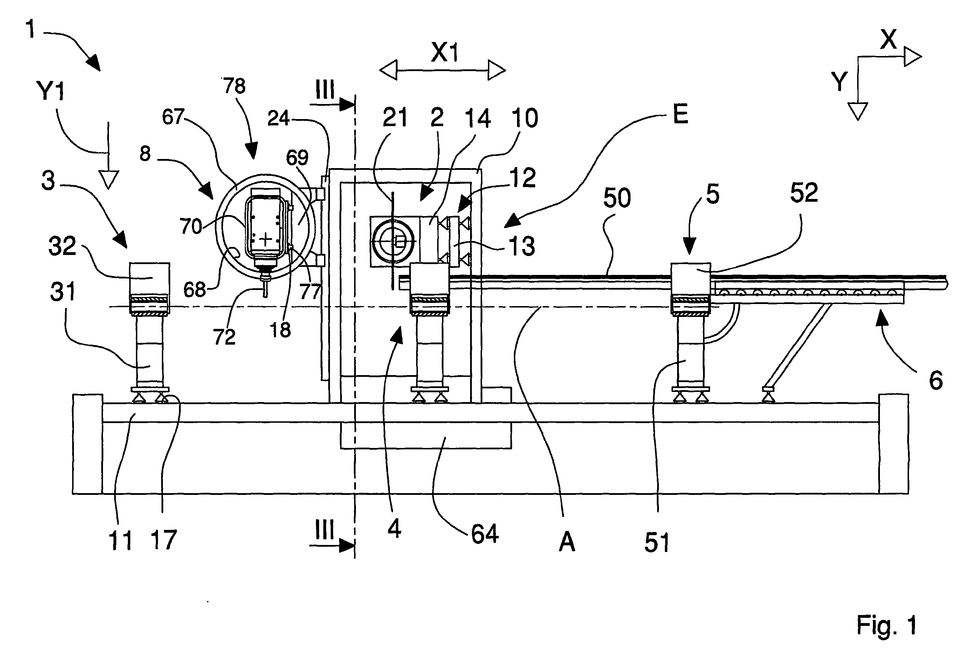

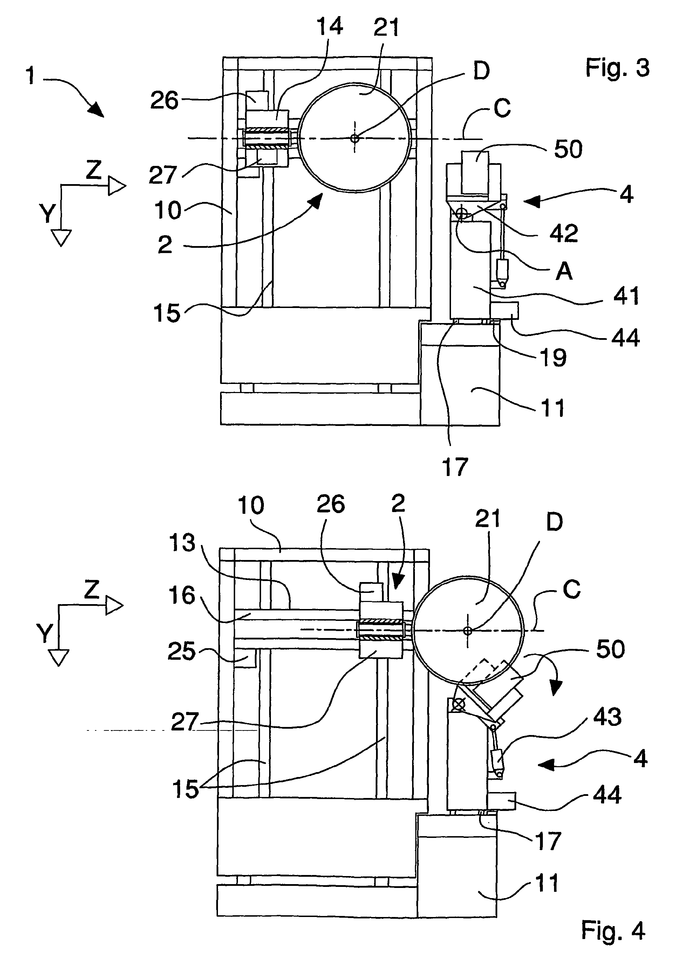

With reference to Figures 1 to 5, there is illustrated a machine tool 1 for machining elongated elements 50, in particular metal and/or plastic profiled elements used in the window and door-frames industry to make frames of fixtures such as, for example, windows, French doors, doors, shutters and the like.

The machine 1 comprises a cutting unit 2 that rotationally supports a disc blade or saw 21, a milling unit 8 provided with an operating head and supporting means 3, 4, 5 arranged for supporting an elongated element to be machined 50.

The machine 1 further comprises driving means that is suitable for moving said cutting unit 2, said milling unit 8 and/or said supporting means 3, 4, 5 so as to cause an interaction between the element to be machined 50 and the disc blade 21 and/or a tool 72 of the operating head.

The disc blade 21 is, for example, of the type without a flange, that is also usable for passing again over previously cut surfaces to obtain a more precise geometry and a more regular and homogenous surface finish.

The supporting means 3, 4, 5 is configured so as to enable the elongated element 50 supported thereby to perform a rotation around a first rotation axis A coinciding with, or parallel to, a longitudinal axis of said elongated element 50.

The supporting means comprises a plurality of clamping devices, for example a first clamping device 3, a second clamping device 4 and a third clamping device 5 which are slidably supported by a base 11 of the machine 1 and are movable along a first movement direction X that is substantially parallel to the first rotation axis A.

In particular, the clamping devices 3, 4, 5 are mounted slidably on rail means 17 of the base 11 of the machine 1 and are arranged aligned along said first movement direction X to support and clamp an elongated element 50.

The cutting unit 2 and the milling unit 8 are slidably supported by frame means 10, which are in turn slidably connected to the base 11 of the machine 1.

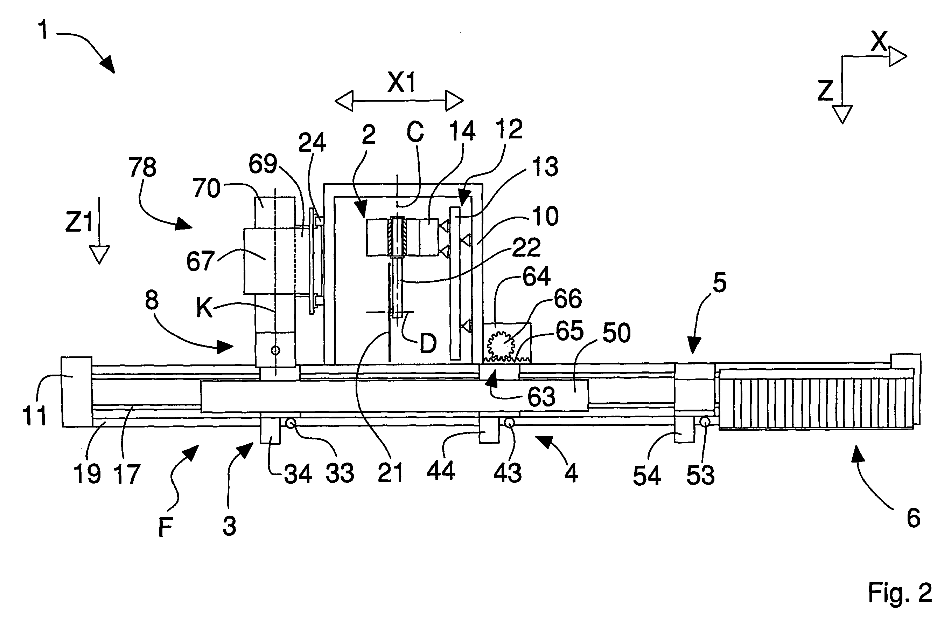

The driving means of the machine tool comprises first motor means 64 (Figures 1 and 2), fixed to the frame means 10 and arranged for moving the latter along a second movement direction X1 that is substantially parallel to the first movement direction X.

Motion transmitting means 63 is provided to enable the first motor means 64 to move the frame means 10. As shown in Figure 2, the motion transmitting means 63 includes, for example, a first rack 65 fixed to the base 11 and engaged by toothed wheel means 66 rotated by the first motor means 64, for example of electric type.

In a version of the machine that is not illustrated, the first motor means 64 comprises linear motor means fixed to the base 11 and acting directly on the frame means 10.

The first motor means 64 is controlled by a machine control and management unit 1, which is of known type and is not illustrated in the figures, so as to position the frame means 10, and the cutting unit 2 and the milling unit 8 therewith, in a plurality of different positions along said second movement direction X1, in function of the dimensions of the elements to be machined 50 and/or of the machinings to be performed on the latter.

The cutting unit 2 is connected to the frame means 10 so as to be movable along a first advancing direction Y and along a second advancing direction Z that are substantially orthogonal to one another and to the first rotation axis A. For this purpose, the cutting unit 2 is fixed to the frame means 10 by first connecting means 12 comprising, for example, a first carriage 13 and a second carriage 14.

The first carriage 13 is slidable along first guides 15 of the frame means 10 that are substantially parallel to the first advancing direction Y and slidably supports the second carriage 14. The latter in fact engages in second guides 16 of the first carriage 13 that are substantially parallel to the second advancing direction Z.

The driving means of the machine comprises second motor means 25 and third motor means 26 configured for moving respectively the first carriage 13 along the first advancing direction Y and the second carriage 14 along the second advancing direction Z.

The cutting unit 2 is provided with a supporting arm 22 that is suitable for rotationally supporting the disc blade 21. The supporting arm 22 is mounted rotatably around a second rotation axis C, that is almost orthogonal to a revolution axis D around which the disc blade 21 rotates during cutting. The second rotation axis C is further almost parallel to the second advancing direction Z and is thus almost orthogonal to the first rotation axis A.

The arm 22 is rotated by an actuating device 27 of the driving means that is found on the cutting unit 2.

The disc blade 21 is thus movable in translation along two axes that are orthogonal to one another (first and second advancing directions Y, Z) and lie on a plane that is orthogonal to the first movement direction X, and along an axis (movement direction X1) that is parallel to said first movement direction X and rotates around a further axis (second rotation axis C). The aforesaid movement axes are of the numeric control type (CNC) managed by the management and control unit of the machine tool 1.

The driving means comprises fourth motor means 34, fifth motor means 44 and sixth motor means 54 arranged for moving independently respectively the first clamping device 3, the second clamping device 4 and the third clamping device 5. Motion transmission means is provided to enable the aforesaid motor means 34, 44, 54 to move the respective clamping devices 3, 4, 5.

Said transmission means includes, for example, a second rack 19 fixed to the base 11 of the machine 1 and engaged by toothed wheels of the motor means, of electric and rotational type.

Also the motor means 34, 44, 54 is controlled by the machine control and management unit 1, so as to arrange the clamping devices 3, 4, 5 in a plurality of different positions, in function of the dimensions of the element to be machined 50 and/or of the machinings to be performed on the latter.

In addition to that, the motor means 34, 44, 54 enables the clamping devices 3, 4, 5 to advance and move the element 50 automatically with respect to the cutting unit 2 along the first movement direction X.

Each clamping device 3, 4, 5 comprises a respective supporting element 31, 41, 51 that is suitable for rotationally supporting a respective clamp 32, 42, 52. In particular, each clamp 32, 42, 52 is able to perform a rotation around the first rotation axis A, by a desired angle comprised between 0° and 360°, in particular between 0° and 90°.

For this purpose, the driving means comprises first actuating means 33, second actuating means 43 and third actuating means 53, associated respectively with the first clamping device 3, with the second clamping device 4 and with the third clamping device 5 to rotate the respective clamps 32, 42, 52.

The actuating means 33, 43, 53 are, for example, linear electric actuators, controlled by the control and management unit so as to rotate in a coordinated manner in the same rotation direction and by the same angular degree the elongated element 50.

The clamps 32, 42, 52 of the clamping devices 3, 4, 5 are thus movable in translation (first movement direction X) and rotationally movable (first rotation axis A) according to movement axes of the numeric control type (CNC), managed by the machine management and control unit of the machine tool 1.

Each clamp 32, 42, 52 comprises at least a pair of respective opposite jaws that are suitable for clamping opposite sides of the element 50.

The machine 1 is further provided with further supporting means 6 arranged for slidably supporting the elongated element 50 and comprising, for example, a roller conveyor extending in the first movement direction X and associated with the third clamp device 5. The roller conveyor enables the elongated elements 50 to be positioned and supported before they are supported and clamped by the supporting means 3, 4, 5.

In an embodiment of the machine that is not illustrated, the further supporting means 6 is not associated with the third clamping device 5, but is provided with a respective supporting element slidably fixed to the rail means 17 of the base 11 of the machine, and driven independently by respective motor means, which is also controlled by the management and control unit.

The milling unit 8 is connected to the frame means 10 by second connecting means 78 comprising a first supporting element 67 slidably connected to fourth guides 24, fixed to an external wall 76 of the frame means 10. The fourth guides 24 are substantially orthogonal to the first movement direction X and parallel to the first advancing direction Y. The milling unit 8 is thus movable along a third advancing direction Y1 that is substantially parallel to the first advancing direction Y of the cutting unit 2.

The first supporting element 67, for example shaped as a hollow cylinder, comprises an internal wall 68 that rotationally supports a carriage 69.

The carriage 69 slidably supports a second supporting element 70 of the milling unit 8, the operating head being fixed at an end 71 of which, facing the element to be machined 50.

In particular, the second supporting element 70 is slidably fixed to fifth guides 77 of the carriage 69 by fifth sliding blocks 18.

The second supporting element 70, which comprises, for example, an elongated rectilinear arm, sliding on the fifth guides 77 of the carriage 69, is movable along a fourth advancing direction Z1, substantially parallel to the second advancing direction Z of the cutting unit 2, and is almost orthogonal to the third advancing direction Y1.

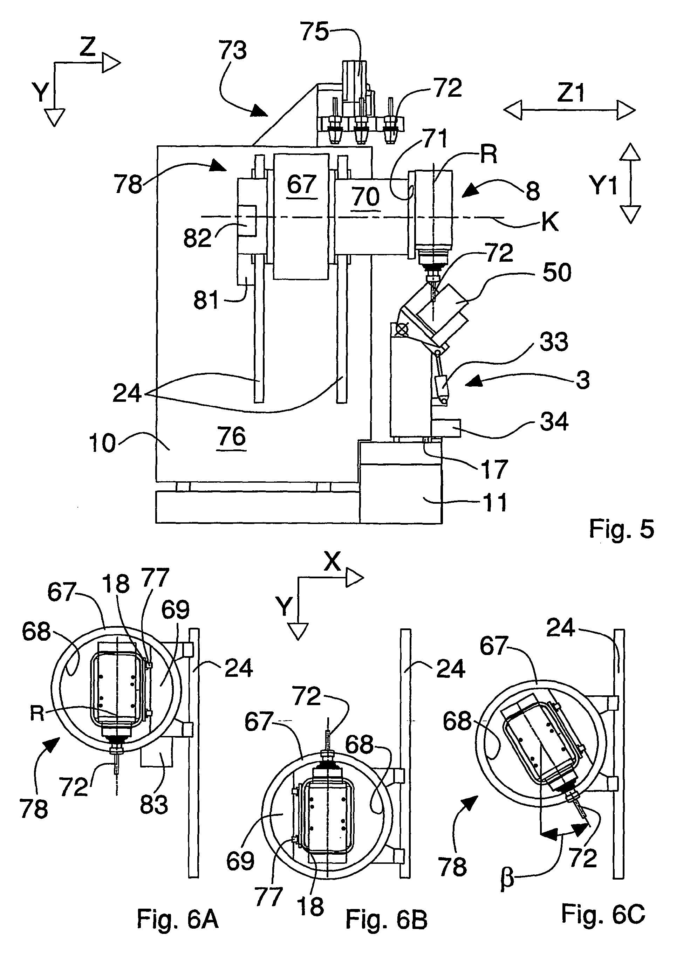

Further, owing to the rotatable coupling between the first supporting element 67 and the carriage 69, the second supporting element 70 and therefore the operating head are able to perform a rotation around a third rotation axis K by an angle **β** (Figure 6c) having an amplitude comprised between 0° and 360°. The third rotation axis K is substantially parallel to the fourth advancing direction Z1.

The operating head of the milling unit 8 comprises, for example, a electrospindle arranged for rotating a tool 72 around a work axis R and interacting with the element to be machined 50. The work axis R is almost orthogonal to the third rotation axis K.

The milling unit 8 and thus the operating head are moved linearly along the third advancing direction Y1 by seventh motor means 81 (Figure 5) and along the fourth advancing direction by eighth motor means 82 (Figure 5). Further, the milling unit 8, and therefore the operating head, are rotated around the third rotation axis K by ninth motor means 83 (Figure 6A), the motor means 81, 82, 83 also being controlled by the control and management unit of the machine tool 1.

It is provided for the machine tool 1 being further able to comprise a tool magazine 73 (Figure 5) arranged for housing a plurality of different further tools 72 suitable for performing specific milling tasks. The tool magazine 73, for example of circular carousel or chain type, is rotated by tenth motor means 75 and is fixed to the top of the frame means 10.

Figures 6A to 6C show some possible configurations that the milling unit 8 can assume.

In particular, there are shown various positions of the milling unit 8 in the third advancing direction Y1 that are associated with respective angular positions assumed by the carriage 69 and therefore by the second supporting element 70 and by the operating head. For example, Figure 6C shows the operating head tilted by an angle **β**, measured from a vertical direction that is substantially parallel to the third advancing direction Y1, whilst Figure 6B shows the milling unit positioned to perform a tool change with the tool magazine 73.

The operation of the machine tool 1 according to the invention provides to a cutting cycle of an elongated element 50, positioning an elongated element 50on the further supporting means 6, at the third clamping device 5. In order to perform a facing or end cut on the element 50, in order to create a precise reference surface for the subsequent machinings, the third clamping device 5 moves the element 50 in the first movement direction X as far as a first work position E in which a free end of said element 50 faces the cutting unit 2. In this first work position E the element 50 is also supported and clamped by the second clamping device 4 (Figure 1).

After the facing cut has been terminated, the third clamping device 5 is driven so as to position the element to be machined 50 in a second work position F, between the clamps 32, 42 of the first clamping device 3 and of the second clamping device 4 (Figure 2). The latter are arranged in a suitably spaced manner so as to limit the flexure of the element 50 during cutting and preventing the triggering of vibrations that could compromise the quality and the precision of the cut.

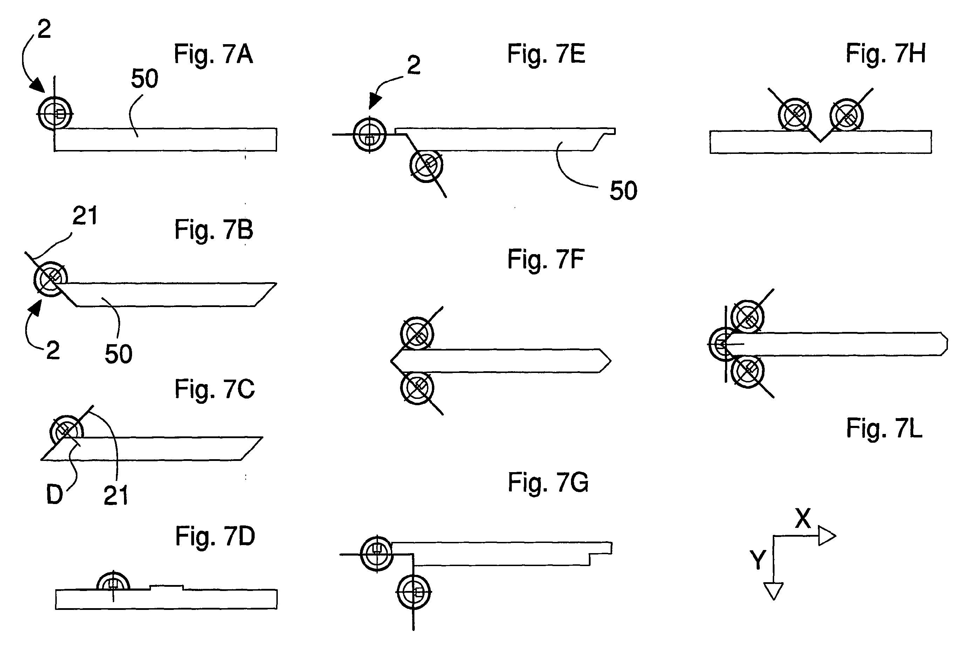

Once the cutting-off cut has been completed, the portion of element obtained, comprised between the first clamping device 3 and the second clamping device 4, can be subjected to successive machinings, for example single and composite cuts, as illustrated in Figures 7A to 7L.

These cuts are obtainable by suitably rotating the disc blade 21 of the cutting unit 2 and suitably moving the latter and/or the clamping devices 3, 4, i.e. the element 50, respectively along the advancing directions Y, Z and the first movement direction X.

The cutting unit 2 is able to perform machinings that require a sole pass or action of the blade (Figure 7A-7D), two successive actions (Figure 7E-7H), three successive actions (Figure 7L).

The tilted or angled cuts illustrated in Figures 7B, 7C, 7E, 7F, 7H, 7L are made by moving in step, in a suitably coordinated manner, the cutting unit 2 and the element to be machined 50.

In the case of horizontal longitudinal cuts (Figures 7D, 7E, 7G) the disc blade 21 is maintained in position, rotating around the revolution axis D thereof, whilst the element 50 is moved suitably along the first movement direction X.

The possibility of rotating the element 50 according to the first rotation axis A further enables machinings to be performed on different sides of said element and/or particular composite machinings to be performed, for example making pyramid-shaped elements or out of squareness elements.

The machine 1 enables a series of successive machinings to be performed on the element 50, maintaining the latter supported and clamped by the supporting means 3, 4, 5. For example, the element 50 can be supported and clamped by the first clamping device 3 and by the second clamping device 4 to be subjected to two successive 45° end cuts. After the first cut has been performed, the clamping devices 3, 4 are driven so as to move the element 50 to a second work position in which the latter is subjected to the second end cut. The element 50 is then stably and correctly positioned during the two following machinings so as to ensure the precision and accuracy of the machinings. As it is not necessary to dismantle from the supporting means 3, 4, 5 the element 50 and thus reposition the latter, positioning errors are thus avoided that could compromise the precision and quality of the machining.

This advantage is also obtained from performing further machinings on the element 50 for finishing of the element 50 by the milling unit 8.

In use, it is also possible to move the frame means 10 and the cutting unit 2 and the milling unit 8 therewith and to maintain the supporting means 3, 4, 5 and/or the element 50 fixed.

Further, a work cycle of the machine tool 1 can provide for performing, at least partially, cutting machinings and further milling machinings simultaneously.

As the element 50 can be rotated around the first rotation axis A and the operating head of the milling unit 8 can be moved linearly along the two respective advancing directions Y1, Z1 and the second movement direction X1, and can be rotated around the third rotation axis K, it is possible to perform a plurality of different machinings on all sides of the element 50 and on the end faces thereof.

When different milling machinings require specific tools it is possible to replace the tool 72 with one of the further tools arranged in the tool magazine 73.

This replacement may, for example, occur when the machine tool 1 is performing cutting machinings by means of the disc blade 21, i.e. whilst the cutting unit 2 is operational and the milling unit 8 is in a non-operating tool-change position. In this manner, the milling unit 8 is tooled whilst the cutting unit 2 is working, such as to enable time and money to be saved.

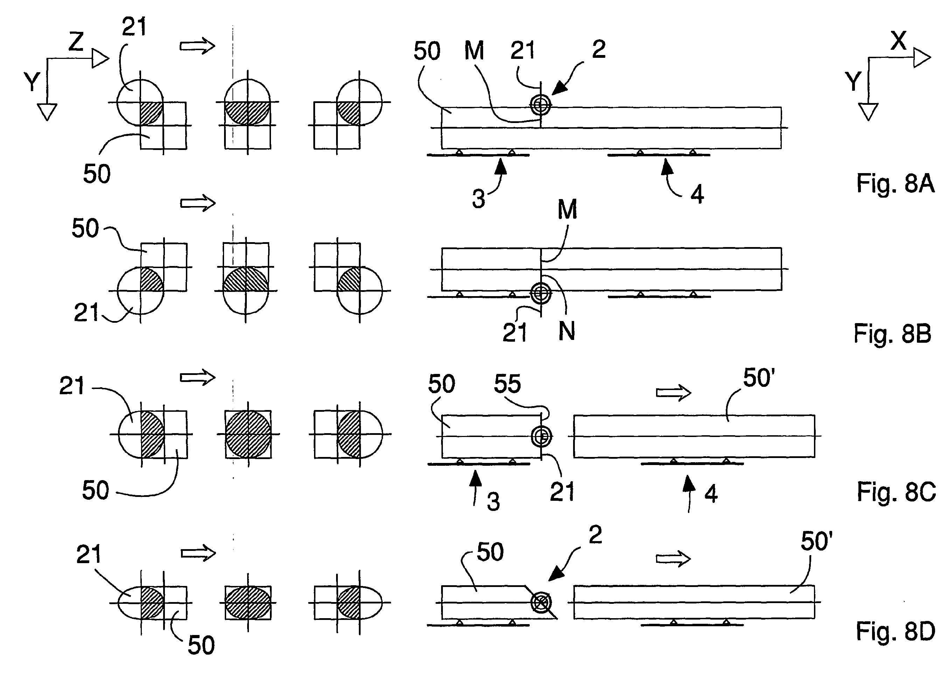

As illustrated in Figures 8A to 8D, the machine tool 1 further enables straight and tilted cuts of elongated elements 50 to be obtained in two actions or passes that have a cross section of significant dimensions, without the need to use blades of large dimensions.

In a first step the disc blade 21 is driven in the second advancing direction Z to run a first transverse cut M on the element 50, the latter being supported and clamped, for example, by the first clamping device 3 and by the second clamping device 4 (Figure 8A).

In a second step, the disc blade 21 performs a second transverse cut N, that is complementary to said first transverse cut M (Figure 8B), so as to cut said element 50 into two distinct portions (Figure 8C).

Before the second step, the disc blade 21, which has been appropriately moved away from the element 50, is moved along the first advancing direction Y by a set amount, which is the same as or half the transverse dimension of said element 50 according to said first advancing direction Y.

With reference to Figures 8A-8C, the first cut M is a cut that is straight or orthogonal to a longitudinal axis of the element 50 and is performed on an upper portion of the element 50.

The disc blade 21 is then lowered by said set amount to perform the second cut N on the lower portion.

It is nevertheless provided that the first transverse cut M and the second transverse cut N can be performed respectively on the lower portion and on the upper portion of the element 50.

The direction of the movements of the disc blade 21 along the second advancing direction Z during the first cut M and the second cut N can be concordant, as illustrated in Figures 8A and 8B, or discordant.

After the cut, the second clamping device 4 removes from the cutting unit 2 a portion 50' of the element to be machined obtained after cutting.

A third step is provided in which the disc blade 21, of the flangeless type, proceeds to pass again over the cutting surface 55 obtained from the cuts M, N to make a better and more homogenous surface finish and a more precise geometry, both in the case of a straight cut (Figure 8C) and of a tilted cut (Figure 8D).

The transverse cuts M, N can be coplanar or can be incident so as to form a solid angle. In this latter case, the step movement of the element 50 according to the first movement direction X is associated with the movement of the cutting unit 2 in the first advancing direction Y.

Using the machine tool 1 thus avoids the need to remove the element to be machined 50 from the machine tool 1 to position the element to be machined 50 on a further finishing machine tool, with a considerable saving of time and costs.

It is further possible to obtain a machine tool 1 that performs a plurality of different machinings on a element to be machined 50 automatically, without requiring the manual intervention of operators.

In particular, the machine tool 1 of the invention is able to perform a plurality of machinings by maintaining the element always positioned and fixed to the supporting means 3, 4, 5.

In addition to the possibility of rotating the element around the first longitudinal rotation axis A, the cutting unit 2 can be moved in translation according to three controlled motion axes Y, Z, X1 (first and second advancing direction and second movement direction), whilst the disc blade 21 can be rotated around the second rotation axis C, which is also controlled.

The milling unit 8 can be moved in translation along respective motion axes X1, Y1, Z1 (second movement direction and third and fourth advancing direction) and rotate around the third rotation axis K. The tool 72 can in turn be rotated around a work axis R, which is also controlled.

In this manner, the machine 1 enables complex and composite machinings to be performed with one or more successive actions of the cutting blade 21 and/or of the tool 72.

This enables the productivity of the machine to be significantly increased, as on the element 50 machinings can be performed automatically without the need to dismantle and reposition on the supporting means 3, 4, 5 said element 50. This further enables more precise and accurate machinings to be obtained, avoiding errors and assembly and positioning imprecisions following manual repositioning of the element by an operator.

It is also possible to perform straight or angled transverse cuts on elements having a cross section of significant dimensions, without needing to use disk blades 21 of appropriate dimensions and/or without having to reposition the element 50 to be cut on supporting means 3, 4, 5 of the machine 1. In fact, the cut can be made in two successive actions or passes of a disc blade 21 that have dimensions that are less than those that are necessary for performing a cut with a single pass.

It is thus possible to reduce the managing costs of the machine tool as disc blades 21 of large dimensions are not required, in function of the measurements of the elements 50 to be cut. Further, as it is not necessary to replace the cutting tool, it is possible to increase productivity compared with known machine tools.

It should be known that the productivity of the machine tool 1 according to the invention is not diminished by replacing milling tools 72 because this operation occurs automatically and generally whilst the cutting unit 2 is machining the element 50.

It is further possible to perform machinings on the element to be machined 50 simply by moving the element 50 and maintaining the cutting blade 21 and/or the tool 72 in a preset position, or vice versa by moving the cutting blade 21 and/or the tool 72 and maintaining the element 50 fixed. Further, owing to the possibility of moving the disc blade 21 and/or the operating head in step with the movement of the element to be machined 50, at least according to the second movement direction X1 parallel to the first movement direction X, the machine tool 1 can perform particular machinings, such as complete or partial cuts of the element 50 without needing to reposition the latter on the machine tool 1 that performs the machining. This enables more precise and accurate machinings to be obtained, avoiding mounting and positioning errors and imprecisions.

It should be further noted that the possibility of moving both the element 50 and the cutting unit 2 and the milling unit 8 along the second movement direction X1 enables the machine tool 1 to machine elements 50 having a greater extent along the first movement direction X for the same overall dimensions of the machine.

Lastly, it is possible to perform a series of different and successive machinings on a element to be machined 50 without needing to dismantle and then reposition said element on the machine tool 1. This enables more precise and accurate machinings to be obtained as errors and imprecisions are avoided that are due to successive mounting and positioning. Further, the possibility of moving the supporting means 3, 4, 5 of the machine 1 automatically enables said machinings to be performed on the element 50 more rapidly and without the manual intervention of operators.

An alternative embodiment of the machine tool of the invention is further provided, which is not illustrated, comprising two milling units 8, which are substantially equal to one another and are fixed to opposite walls of the frame means 10. In particular, the second milling unit 8 is connected to a respective external wall of the frame means 10 opposite the external wall 76.

In a further alternative embodiment of the machine tool 1 of the invention, which is not shown, further frame means is provided, for example conformed like the frame means 10, arranged for slidably supporting the milling unit 8. In this embodiment the frame means 10 is arranged for slidably supporting the cutting unit 2 and the further frame means is arranged for slidably supporting the milling unit 8.

This configuration enables the machine to be made even more flexible and enables a high number of complicated cutting and/or milling machinings to be performed, even simultaneously, on the four side faces of the element 50 and/or on the end faces thereof.

In this manner, the milling unit 8 can be connected to the further frame means by connecting means that is substantially similar to the second connecting means 78.

In a still further embodiment of the machine tool 1 of the invention, which is not shown, further frame means is provided, for example shaped as the frame means 10, arranged for slidably supporting a further milling unit, for example substantially the same as the milling unit 8 disclosed above. In this manner, the frame means 10 is arranged for slidably supporting the cutting unit 2 and the milling unit 8 and the further frame means are arranged for slidably supporting a further milling unit 8. In this manner, the further milling unit can be connected to the further frame means by connecting means that is substantially similar to the second connecting means 78.

Variants and/or additions to what is disclosed above and/or to what is shown in the disclosed drawings are possible, without departing from the scope of the claims.

## Claims

1. Machine tool for machining elongated elements (50), in particular profiled elements of frames, comprising a cutting unit (2) for rotationally supporting a disc blade (21), at least one milling unit (8) for rotationally supporting a tool (72), supporting means (3, 4, 5) for supporting an element to be machined (50), and driving means (25, 26, 34, 44, 54, 64, 81, 82, 83) for moving said cutting unit (2) and/or said milling unit (8) and/or said supporting means (3, 4, 5) so as to cause an interaction between said element to be machined (50) and said disc blade (21) and/or said tool (72), said supporting means (3, 4, 5) being such as to enable said element to be machined (50) to perform a rotation around a first rotation axis (A) coincident with or parallel to a longitudinal axis of said element (50), said supporting means (3, 4, 5) being movable by said driving means (34, 44, 54) along a first movement direction (X) substantially parallel to said first rotation axis (A), **characterized in that** said cutting unit (2) being movable along a second movement direction (X1), that is parallel to said first movement direction (X), a first advancing direction (Y) and a second advancing direction (Z), said second movement direction (X1), said first advancing direction (Y) and said second advancing direction (Z) being mutually orthogonal, said cutting unit (2)comprising a supporting arm (22) suitable for rotationally supporting said disc blade (21) and being mounted rotatably around a second rotation axis (C) that is parallel to said second advancing direction (Z) and orthogonal to said first rotation axis (A), said milling unit (8) being linearly movable along said second movement direction (X1), a third advancing direction (Y1) and e fourth advancing direction (Z1) said third advancing direction (Y1) being parallel to the first advancing direction (Y) and said fourth advancing direction (Z1) being parallel to said second advancing direction (Z), said milling unit being rotationally movable around a third rotation axis (K) that is parallel to said fourth advancing direction (Z1).

2. Machine according to claim 1, wherein said driving means comprises motor means (64, 25, 26) for moving said cutting unit (2) along a first advancing direction (Y), a second advancing direction (Z) and a second movement direction (X1), the latter being almost parallel to said first movement direction (X).

3. Machine according to claim 1 or 2, wherein said driving means comprises respective motor means (64, 81, 82, 83) for moving said milling unit (8) linearly along a third advancing direction (Y1), a fourth advancing direction (Z1) and a second movement direction (X1), the latter being almost parallel to said first movement direction (X), and rotating around said third rotation axis (K), the latter being almost parallel to said fourth advancing direction (Z1).

4. Machine according to any preceding claim, comprising frame means (10) arranged for supporting said cutting unit (2) and slidably connected to base means (11) of said machine (1) along said second movement direction (X1).

5. Machine according to claim 4, comprising first connecting means (12) that is suitable for connecting said cutting unit (2) to said frame means (10).

6. Machine according to claim 5, wherein said first connecting means (12) comprises a first carriage (13) and a second carriage (14), said first carriage (13) being slidably connected to said frame means (10) along said first advancing direction (Y) and arranged for slidably supporting said second carriage (14) along said second advancing direction (Z).

7. Machine according to claim 6, wherein said first carriage (13) is engaged with first guides (15) of the frame means (10), said second carriage (14) being engaged with second guides (16) of said first carriage (13).

8. Machine according to any one of claims 4 to 7, wherein said milling unit (8) is slidably fixed to said frame means (10).

9. Machine according to claim 8, comprising two milling units (8) slidably fixed to said frame means (10).

10. Machine according to claim 9, comprising further frame means arranged for supporting said milling unit (8) and slidably connected to base means (11) of said machine (1) along said second movement direction (X1).

11. Machine according to any one of claims 8 to 10, comprising second connecting means (78) for connecting said milling unit (8) to said frame means (10).

12. Machine according to claim 11, wherein said second connecting means (78) comprises a first supporting element (67), slidably connected to said frame means (10) along said third advancing direction (Y1), a carriage (69) rotationally supported by said first supporting element (67) around said third rotation axis (K) and a second supporting element (70) slidably connected to said carriage (69) along said fourth advancing direction (Z1).

13. Machine according to claim 12, wherein said milling unit (8) comprises an operating head that is suitable for rotationally supporting said tool (72) and fixed to an end (71) of said second supporting element (70).

14. Machine according to claim 12 or 13, wherein said first supporting element (67) is engaged with fourth guides (24) of the frame means (10), said second supporting element (70) being engaged with fifth guides (77) of said carriage (69).

15. Machine according to any one of claims 12 to 14, wherein said first supporting element (67) comprises a tubular portion provided with an internal wall (68) that is substantially cylindrical and rotationally supports said carriage (69).

16. Machine according to any one of claims 4 to 15, wherein said driving means comprises first motor means (64) arranged for moving said frame means (10) along said second movement direction (X1).

17. Machine according to claim 16, comprising transmitting means (63) interposed between said first motor means (64) and said frame means (10).

18. Machine according to claim 17, wherein said transmitting means (63) comprises rack means (65) fixed to said base means (11) and engaged by toothed wheel means (66) rotated by said first motor means (64).

19. Machine according to claim 16, wherein said first motor means (64) comprises linear motor means.

20. Machine according to any preceding claim, comprising a tool magazine (73), in particular of the circular carousel or chain type, arranged for supplying to and receiving from said milling unit (8) tools (72).

21. Machine according to claim 20, as appended to any one of claims 4 to 19 wherein said tool magazine (73) is fixed to an upper portion of said frame means (10).

## Patentansprüche

1. Werkzeugmaschine zur Bearbeitung länglicher Elemente (50), insbesondere von Profilelementen von Rahmen, aufweisend eine Schneideinheit (2) zum rotierenden Abstützen eines Scheibenmessers (21), zumindest eine Fräseinheit (8) zum rotierenden Abstützen eines Werkzeugs (72), ein Stützmittel (3, 4, 5) zum Abstützen eines zu bearbeitenden Elements (50), und ein Antriebsmittel (25, 26, 34, 44, 54, 64, 81, 82, 83) zur Bewegung der Schneideinheit (2) und/oder der Fräseinheit (8) und/oder des Stützmittels (3, 4, 5), um ein Zusammenwirken zwischen dem zu bearbeitenden Element (50) und dem Scheibenmesser (21) und/oder dem Werkzeug (72) zu veranlassen, wobei das Stützmittel (3, 4, 5) dazu ausgebildet ist, es dem zu bearbeitenden Element (50) zu ermöglichen, eine Rotation um eine erste Rotationsachse (A) zu vollziehen, die mit einer Längsachse des Elements (50) zusammenfällt oder parallel zu dieser ist, wobei das Stützmittel (3, 4, 5) mittels des Antriebsmittels (34, 44, 54) entlang einer ersten Bewegungsrichtung (X) beweglich ist, die im Wesentlichen parallel zur ersten Rotationsachse (A) ist, **dadurch gekennzeichnet, dass** die Schneideinheit (2) entlang einer zweiten Bewegungsrichtung (X1), die parallel zur ersten Bewegungsrichtung (X) ist, einer ersten Vorschubrichtung (Y) und einer zweiten Vorschubrichtung (Z) beweglich ist, wobei die zweite Bewegungsrichtung (X1), die erste Vorschubrichtung (Y) und die zweite Vorschubrichtung (Z) zueinander senkrecht sind, wobei die Schneideinheit (2) einen Stützarm (22) aufweist, der dazu ausgebildet ist, das Scheibenmesser (21) rotierend abzustützen, und rotierbar um eine zweite Rotationsachse (C) aufgenommen ist, die parallel zur zweiten Vorschubrichtung (Z) und senkrecht zur ersten Rotationsachse (A) ist, wobei die Fräseinheit (8) entlang der zweiten Bewegungsrichtung (X1), einer dritten Vorschubrichtung (Y1) und einer vierten Vorschubrichtung (Z1) linear beweglich ist, wobei die dritte Vorschubrichtung (Y1) parallel zur ersten Vorschubrichtung (Y) und die vierte Vorschubrichtung (Z1) parallel zur zweiten Vorschubrichtung (Z) ist, wobei die Fräseinheit um eine dritte Rotationsachse (K) rotierend beweglich ist, die parallel zur vierten Vorschubrichtung (Z1) ist.

2. Maschine nach Anspruch 1, wobei das Antriebsmittel ein Motormittel (64, 25, 26) zur Bewegung der Schneideinheit (2) entlang einer ersten Vorschubrichtung (Y), einer zweiten Vorschubrichtung (Z) und einer zweiten Bewegungsrichtung (X1) aufweist, wobei die Letztere nahezu parallel zur ersten Bewegungsrichtung (X) ist.

3. Maschine nach Anspruch 1 oder 2, wobei das Antriebsmittel jeweilige Motormittel (64, 81, 82, 83) zur linearen Bewegung der Fräseinheit (8) entlang einer dritten Vorschubrichtung (Y1), einer vierten Vorschubrichtung (Z1) und einer zweiten Bewegungsrichtung (X1), wobei die Letztere nahezu parallel zur ersten Bewegungsrichtung (X) ist, und zum Rotieren um die dritte Rotationsachse (K) aufweist, wobei die Letztere nahezu parallel zur vierten Vorschubrichtung (Z1) ist.

4. Maschine nach irgendeinem der vorhergehenden Ansprüche, aufweisend ein Rahmenmittel (10), das dazu ausgestaltet ist, die Schneideinheit (2) abzustützen, und das verschieblich entlang der zweiten Bewegungsrichtung (X1) mit einem Basismittel (11) der Maschine (1) verbunden ist.

5. Maschine nach Anspruch 4, aufweisend ein erstes Verbindungsmittel (12), das dazu ausgebildet ist, die Schneideinheit (2) mit dem Rahmenmittel (10) zu verbinden.

6. Maschine nach Anspruch 5, wobei das erste Verbindungsmittel (12) einen ersten Schlitten (13) und einen zweiten Schlitten (14) aufweist, wobei der erste Schlitten (13) verschieblich entlang der ersten Vorschubrichtung (Y) mit dem Rahmenmittel (10) verbunden ist und dazu ausgestaltet ist, den zweiten Schlitten (14) entlang der zweiten Vorschubrichtung (Z) verschieblich abzustützen.

7. Maschine nach Anspruch 6, wobei sich der erste Schlitten (13) im Eingriff mit ersten Führungen (15) des Rahmenmittels (10) befindet, und wobei sich der zweite Schlitten (14) im Eingriff mit zweiten Führungen (16) des ersten Schlittens (13) befindet.

8. Maschine nach irgendeinem der Ansprüche 4 bis 7, wobei die Fräseinheit (8) verschieblich am Rahmenmittel (10) festgelegt ist.

9. Maschine nach Anspruch 8, aufweisend zwei Fräseinheiten (8), die verschieblich am Rahmenmittel (10) festgelegt sind.

10. Maschine nach Anspruch 9, aufweisend ein weiteres Rahmenmittel, das dazu ausgestaltet ist, die Fräseinheit (8) zu stützen, und das verschieblich entlang der zweiten Bewegungsrichtung (X1) mit einem Basismittel (11) der Maschine (1) verbunden ist.

11. Maschine nach irgendeinem der Ansprüche 8 bis 10, aufweisend ein zweites Verbindungsmittel (78), um die Fräseinheit (8) mit dem Rahmenmittel (10) zu verbinden.

12. Maschine nach Anspruch 11, wobei das zweite Verbindungsmittel (78) ein erstes Stützelement (67), das entlang der dritten Vorschubrichtung (Y1) verschieblich mit dem Rahmenmittel (10) verbunden ist, einen Schlitten (69), der durch das erste Stützelement (67) um die dritte Rotationsachse (K) rotierend abgestützt ist, und ein zweites Stützelement (70) aufweist, das mit dem Schlitten (69) verschieblich entlang der vierten Vorschubrichtung (Z1) verbunden ist.

13. Maschine nach Anspruch 12, wobei die Fräseinheit (8) einen Arbeitskopf aufweist, der dazu ausgestaltet ist, das Werkzeug (72) rotierend abzustützen, und der an einem Ende (71) des zweiten Stützelements (70) festgelegt ist.

14. Maschine nach Anspruch 12 oder 13, wobei sich das erste Stützelement (67) im Eingriff mit vierten Führungen (24) des Rahmenmittels (10) befindet, und wobei sich das zweite Stützelement (70) im Eingriff mit fünften Führungen (77) des Schlittens (69) befindet.

15. Maschine nach irgendeinem der Ansprüche 12 bis 14, wobei das erste Stützelement (67) einen rohrförmigen Teil aufweist, der mit einer Innenwand (68) versehen ist, die im Wesentlichen zylindrisch ist und den Schlitten (69) rotierend abstützt.

16. Maschine nach irgendeinem der Ansprüche 4 bis 15, wobei das Antriebsmittel ein erstes Motormittel (64) aufweist, das dazu ausgestaltet ist, das Rahmenmittel (10) entlang der zweiten Bewegungsrichtung (X1) zu bewegen.

17. Maschine nach Anspruch 16, aufweisend ein Übermittlungsmittel (63), das zwischen dem ersten Motormittel (64) und dem Rahmenmittel (10) angeordnet ist.

18. Maschine nach Anspruch 17, wobei das Übermittlungsmittel (63) ein Gestellmittel (65) aufweist, das am Basismittel (11) festgelegt ist, und an das ein Zahnradmittel (66) eingreift, das durch das erste Motormittel (64) rotiert wird.

19. Maschine nach Anspruch 16, wobei das erste Motormittel (64) ein Linearmotormittel aufweist.

20. Maschine nach irgendeinem der vorhergehenden Ansprüche, aufweisend ein Werkzeugmagazin (73), insbesondere nach Art eines zylindrischen Karussells oder einer Kette, das dazu ausgestaltet ist, die Fräseinheit (8) mit Werkzeugen (72) zu versorgen und diese von dieser zu empfangen.

21. Maschine nach Anspruch 20, sofern auf irgendeinem der Ansprüche 4 bis 19 rückbezogen, wobei das Werkzeugmagazin (73) an einem oberen Teil des Rahmenmittels (10) festgelegt ist.

## Revendications

1. Machine-outil pour l'usinage d'éléments allongés (50), en particulier des éléments de cadre profilés, comprenant une unité de coupe (2) destinée à supporter en rotation une lame circulaire (21), au moins une unité de fraisage (8) destinée à supporter en rotation un outil (72), des moyens de support (3, 4, 5) destinés à supporter un élément (50) à usiner, et des moyens d'entraînement (25, 26, 34, 44, 54, 64, 81, 82, 83) destinés à déplacer ladite unité de coupe (2) et/ou ladite unité de fraisage (8) et/ou lesdits moyens de support (3, 4, 5) afin de provoquer une interaction entre ledit élément à usiner (50) et ladite lame circulaire (21) et/ou ledit outil (72), lesdits moyens de support (3, 4, 5) étant aptes à permettre audit élément à usiner (50) d'effectuer une rotation autour d'un premier axe de rotation (A) coïncidant avec, ou parallèle à, un axe longitudinal dudit élément (50), lesdits moyens de support (3, 4, 5) étant déplaçables par lesdits moyens d'entraînement (34, 44, 54) le long d'une première direction de déplacement (X) sensiblement parallèle audit premier axe de rotation (A), ***caractérisée en ce que*** ladite unité de coupe (2) est mobile le long d'une deuxième direction de déplacement (X1), qui est parallèle à ladite première direction de déplacement (X), d'une première direction de progression (Y) et d'une deuxième direction de progression (Z), ladite deuxième direction de déplacement (X1), ladite première direction de progression (Y) et ladite deuxième direction de progression (Z) étant orthogonales entre elles, ladite unité de coupe (2) comprenant un bras de support (22) apte à supporter en rotation ladite lame circulaire (21) et qui est monté rotatif autour d'un deuxième axe de rotation (C) qui est parallèle à ladite deuxième direction de progression (Z) et orthogonal audit premier axe de rotation (A), ladite unité de fraisage (8) étant mobile de manière linéaire le long de ladite deuxième direction de déplacement (X1), d'une troisième direction de progression (Y1) et d'une quatrième direction de progression (Z1), ladite troisième direction de progression (Y1) étant parallèle à la première direction de progression (Y) et ladite quatrième direction de progression (Z1) étant parallèle à ladite deuxième direction de progression (Z), ladite unité de fraisage étant mobile en rotation autour d'un troisième axe de rotation (K) qui est parallèle à ladite quatrième direction de progression (Z1).

2. Machine selon la revendication 1, dans laquelle lesdits moyens d'entraînement comprennent des moyens de moteur (64, 25, 26) pour déplacer ladite unité de coupe (2) le long d'une première direction de progression (Y), d'une deuxième direction de progression (Z) et d'une deuxième direction de déplacement (X1), cette dernière étant presque parallèle à ladite première direction de déplacement (X).

3. Machine selon la revendication 1 ou 2, dans laquelle lesdits moyens d'entraînement comprennent des moyens de moteur respectifs (64, 81, 82, 83) pour déplacer ladite unité de fraisage (8) de manière linéaire le long d'une troisième direction de progression (Y1), d'une quatrième direction de progression (Z1) et d'une deuxième direction de déplacement (X1), cette dernière étant presque parallèle à ladite première direction de déplacement (X), et tournant autour dudit troisième axe de rotation (K), ce dernier étant presque parallèle à ladite quatrième direction de progression (Z1).

4. Machine selon l'une quelconque des revendications précédentes, comprenant des moyens de bâti (10) prévus pour supporter ladite unité de coupe (2) et reliés de manière coulissante à des moyens de base (11) de ladite machine (1) le long de ladite deuxième direction de déplacement (X1).

5. Machine selon la revendication 4, comprenant des premiers moyens de raccordement (12) qui sont aptes à coupler ladite unité de coupe (2) auxdits moyens de bâti (10).

6. Machine selon la revendication 5, dans laquelle lesdits moyens de raccordement (12) comprennent un premier chariot (13) et un deuxième chariot (14), ledit premier chariot (13) étant relié de manière coulissante auxdits moyens de bâti (10) le long de ladite première direction de progression (Y) et agencés pour soutenir de manière coulissante ledit deuxième chariot (14) le long de ladite deuxième direction de progression (Z).

7. Machine selon la revendication 6, dans laquelle ledit premier chariot (13) s'engage avec des premiers guides (15) des moyens de bâti (10), ledit deuxième chariot (14) s'engageant avec des deuxièmes guides (16) dudit premier chariot (13).

8. Machine selon l'une quelconque des revendications 4 à 7, dans laquelle ladite unité de fraisage (8) est fixée de manière coulissante auxdits moyens de bâti (10).

9. Machine selon la revendication 8, comprenant deux unités de fraisage (8) fixées de manière coulissante auxdits moyens de bâti (10).

10. Machine selon la revendication 9, comprenant d'autres moyens de bâti prévus pour supporter ladite unité de fraisage (8) et reliés de manière coulissante à des moyens de base (11) de ladite machine (1) le long de ladite deuxième direction de déplacement (X1).

11. Machine selon l'une quelconque des revendications 8 à 10, comprenant des deuxièmes moyens de raccordement (78) pour coupler ladite unité de fraisage (8) auxdits moyens de bâti (10).

12. Machine selon la revendication 11, dans laquelle lesdits deuxièmes moyens de raccordement (78) comprennent un premier élément de support (67), relié de manière coulissante auxdits moyens de bâti (10) le long de ladite troisième direction de progression (Y1), un chariot (69) supporté de manière rotative par ledit premier élément de support (67) autour dudit troisième axe de rotation (K) et un deuxième élément de support (70) relié de manière coulissante audit chariot (69) le long de ladite quatrième direction de progression (Z1).

13. Machine selon la revendication 12, dans laquelle ladite unité de fraisage (8) comprend une tête opérationnelle qui est apte à supporter de manière rotative ledit outil (72) et qui est fixée à une extrémité (71) dudit deuxième élément de support (70).

14. Machine selon la revendication 12 ou 13, dans laquelle ledit premier élément de support (67) engage des quatrièmes guides (24) des moyens de bâti (10), ledit deuxième élément de support (70) engageant des cinquièmes guides (77) dudit chariot (69).

15. Machine selon l'une quelconque des revendications 12 à 14, dans laquelle ledit premier élément de support (67) comprend une portion tubulaire pourvue d'une paroi interne (68) qui est sensiblement cylindrique et supporte de manière rotative ledit chariot (69).

16. Machine selon l'une quelconque des revendications 4 à 15, dans laquelle lesdits moyens d'entraînement comprennent des premiers moyens de moteur (64) prévus pour déplacer lesdits moyens de bâti (10) le long de ladite deuxième direction de déplacement (X1).

17. Machine selon la revendication 16, comprenant des moyens de transmission (63) interposés entre lesdits premiers moyens de moteur (64) et lesdits moyens de bâti (10).

18. Machine selon la revendication 17, dans laquelle lesdits moyens de transmission (63) comprennent des moyens de crémaillère (65) fixés auxdits moyens de base (11) et engrenés par des moyens de roue dentée (66) entraînés en rotation par lesdits premiers moyens de moteur (64).

19. Machine selon la revendication 16, dans laquelle lesdits premiers moyens de moteur (64) comprennent des moyens de moteur linéaire.

20. Machine selon l'une quelconque des revendications précédentes, comprenant un magasin (73) d'outils, en particulier de type carrousel circulaire ou à chaîne, prévu pour fournir et recevoir des outils (72) à/de ladite unité de fraisage (8).

21. Machine selon la revendication 20, lorsqu'elle est dépendante de l'une quelconque des revendications 4 à 19, dans laquelle ledit magasin (73) d'outils est fixé à une portion supérieure desdits moyens de bâti (10).
